# EUROPEAN PATENT SPECIFICATION

(11) **EP 1 962 574 B1**
(45) Date of publication and mention of the grant of the patent: **15.02.2017**
(21) Application number: 05804991.7
(22) Date of filing: 21.12.2005
(51) Int. Cl.: A01D 34/90, B25F 5/02, F16F 15/08, A01G 3/08, B25G 1/01

(54) **HANDLE WITH REDUCED VIBRATIONS**
GRIFF MIT VERRINGERTEN SCHWINGUNGEN
POIGNEE A VIBRATIONS REDUITES

(43) Date of publication of application: 03.09.2008
(73) Proprietor: Husqvarna AB, 561 82 Huskvarna (SE)
(72) Inventor: VALFRIDSSON, Stefan, S-554 66 Jönköping (SE); ARVIDSSON, Mikael, S-561 39, HUSKVARNA (SE); HALLENDORFF, Johan, S-553 36, Jönköping (SE)
(86) International application number: PCT/SE2005/002003
(87) International publication number: WO 2007/073251

(56) References cited:
- EP-A1- 1 530 890
- EP-A1- 1 530 890
- US-A- 4 761 939
- US-A- 4 761 939
- US-A- 5 139 358
- US-A- 5 139 358
- US-A- 5 375 666
- US-A- 5 692 306
- US-A- 5 692 306
- US-A1- 2002 004 989

## Description

### FIELD OF THE INVENTION

The claimed invention relates to a handle for a portable engine powered tool comprising an engine, a tube extending from the engine and a working tool placed in the end of the tube.

### BACKGROUND OF THE INVENTION

Engine powered tools are frequently used to facilitate work in for example forests and gardens. The engine and thereto related components however generates a considerable amount of vibrations when the tool is running. These vibrations are transferred to the hands of the operator via the tool handles. Vibrating handles are very uncomfortable for the operator and operators working long shifts with these types of tools are consequently exposed to a considerable amount of vibrations.
US 5,692,306 discloses a hand-held working tool suspended on a support belt and provided with a handle bar for holding the tool during the operation.

### OBJECT OF THE INVENTION

The object of the claimed invention is to provide a handle that reduces the amount of vibrations that the operator is exposed to.

### SUMMARY OF THE INVENTION

These and other objects of the present invention are accomplished by a handle as initially defined and with features according to the characterizing portion of claim 1. The claimed handle comprises at least two handle sections that are secured around the tube somewhere between the engine and the working tool. The handle sections are secured around the tube via elastic elements in order to reduce the transferring of vibrations from the tube to the handle. The elastic elements keep the handle sections separated from the tube in order to avoid that the vibrations in the tube are transferred to the handle.

One preferred embodiment of the claimed invention is to provide the inside surface of the handle sections with at least two recesses positioned separated from each other around the inside of the handle sections, and the outside surface of the tube with the same number of recesses. One recess on the inside surface of the handle section and one recess on the tube are placed in the same radial direction in relation to the longitudinal axle of the tube. The remaining recesses on the handle sections and the tube are placed similarly. An elastic element shaped to fit in the recess in the handle section and the recess on the outside surface of the tube is placed between the handle section and the tube. The length of the elastic element exceeds the distance between an end surface in the recess in the handle section and a second end surface in the recess on the outside surface of the tube so that the handle section and the tube is separated from each other. This embodiment of the claimed invention is easy to manufacture and reduces the amount of vibrations in the handle considerably.

A second embodiment of the elastic elements is to place an elastic ring around the tube and provide the handle sections with a corresponding groove to keep the elastic ring and the handle in the intended position in relation to each other.

The two embodiments could be used in combination or separately and the shape of the recesses and the elastic element modified as long as they fit together.

### BRIEF DESCRIPTION OF THE DRAWINGS

Different embodiments of the present invention will now be described with reference to accompanying drawings, on which:
- Figure 1.: Illustrates a portable power tool.
- Figure 2.: Illustrates a perspective view of one handle section.
- Figure 3.: Illustrates a perspective view with some of the components inside the handle separated from each other.

### DETAILED DESCRIPTION OF A PREFERRED EMBODIMENT

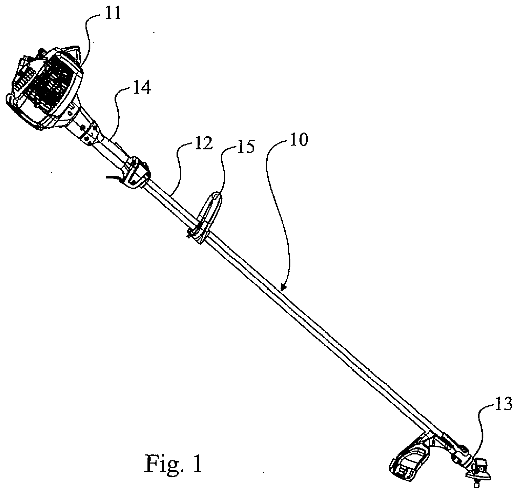

In figure 1 a portable clearing saw 10 is illustrated. The tool is powered by an engine 11 placed together with related components in one end of an elongated tube 12, while a working tool 13 is placed in the opposite end of the tube 12. The length of the tube 12 is selected for the specific work that the tool is designed for. The operator maneuvers the tool by holding a first 14 and a second handle 15 placed along the tube 12. The first handle 14 has a longitudinal axis parallel to the longitudinal axis of the tube 12 and is provided with a throttle device 16 for regulating the engine and a safety device 17 that prevents accidental increase of the throttle when the operator's hand is not in the intended position around the handle 14.

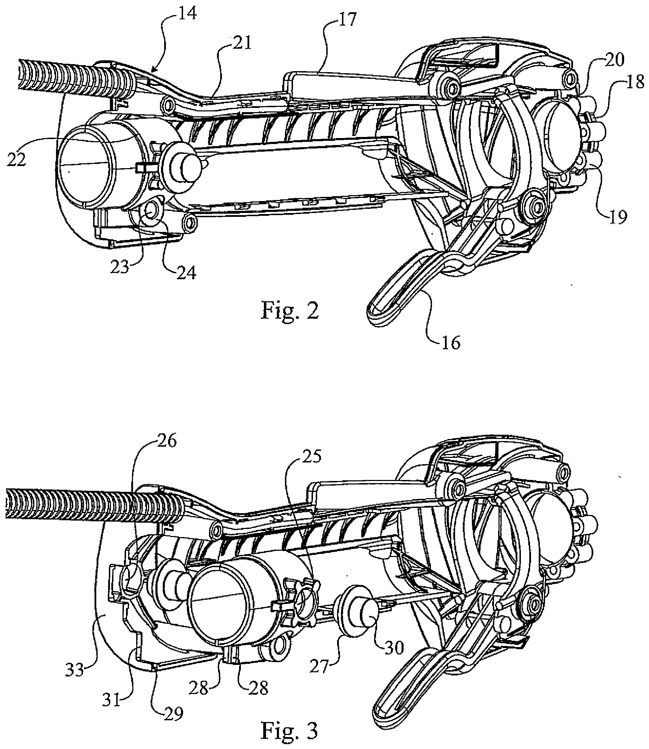

A perspective view of one handle section 21 of the first handle 14 is illustrated in figure 2 and 3. The illustrated handle 14 is placed around the tube 12, not illustrated in this figure. The handle 14 consists of two handle sections, a first handle section 21 and a not illustrated second handle section that surround the tube 12 when put together. In the front end of the handle 14 an elastic ring 18 is placed around the tube 12. The periphery of the ring 18 is provided with a number of protruding loops 19 extending in radial direction from said ring 18. The elastic ring 18 is placed in a groove 20 on the inside surface of the handle section 21. The ring 18 and the loops 19 are made in an elastic material like for example rubber to prevent that vibrations in the tube 12 are transferred to the handle 14. The protruding loops 19 extending from the ring 18 reduces the amount of vibrations transferred from the tube 12 further.

In the rear end of the handle 14 a band 22 is secured around the tube 12 by a screw 23 and a nut 24. The outside surface of the band 22 is provided with two ring shaped supports 25. The ring shaped supports 25 are placed substantially opposite each other on the outer surface of the band 22. Two similar ring shaped recesses 26 are placed on the inside surfaces of the handle sections 21. The ring shaped recesses 26 are positioned in the same radial direction as the ring shaped support 25. An elastic element 30 with the same cross sectional shape as the inside shape of the ring shaped supports 25 and the recesses 26 is placed between the tube 12 and the handle 14 in order to hold the handle 14 in the intended position relative the tube 12. The longitudinal axis of the elastic element 30 is extending in substantially the transverse direction from the longitudinal direction of the tube 12 and the length of the elastic element 30 is longer than the distance from the end surface of the recess 26 to the corresponding end surface inside the ring shaped support 25 in order to prevent contact between the ring shaped support 25 and the inside surface of the handle 14. The elastic element 30 is provided with a flange 27 extending in radial direction from the longitudinal axis of the elastic element 30 and placed close to the middle of the elastic element 30. The flange 27 prevents contact between the ring shaped support 25 and the inside surface of the handle 14.

The ring shaped band 22 around the tube 12 is also provided with an edge 28 extending in radial direction from the ring shaped band 22. The rear end wall 33 of the handle 14 has an opening 29 with two side walls 31 arranged between the illustrated handle section 21 and the not illustrated handle section. The length and position of the edge 28 is selected so that it extends through said opening 29 in the handle 14. The side walls 31 of the opening 29 act as a limitation for the maximum movement of the handle 14 in relation to the tube 12.

## Claims

1. Handle (14) for a portable tool (10), the tool (10) comprising an engine (11) for powering said tool (10) placed in one end of a tube (12) and a working tool (13) in the opposite end of said tube (12); the handle (14) comprising at least two handle sections (20, 21) which are securable around the tube (12) somewhere between the engine (11) and the working tool (13), the longitudinal direction of said handle (14) being substantially parallel to the longitudinal direction of the tube (12), **characterized in that** the front end of said handle (14) is securable around the tube (12) via an elastic ring (18, 19) and the rear end of the handle (14) is securable by at least two elastic elements (30) in order to reduce the transfer of vibrations from the tube (12) to the handle (14), and that the inside surface of each handle section (20, 21) is provided with at least two recesses (26), and that each of said elastic elements (30) is shaped to fit in one recess (26) and is placed between the handle (14) section (20, 21) and the tube (12).

2. Handle (14) according to claim 1, **characterized in that** a longitudinal axis of the elastic element (30) is extending in substantially the transverse direction from the longitudinal direction of the tube (12).

3. Handle (14) according to claim 1, **characterized in that** the outside surface of the tube (12) is provided with the same number of recesses as the total inside surface of the handle sections (20, 21) and that each recess on the tube (12) is placed in the same radial direction as a corresponding recess (26) on the inside of said handle sections (20, 21) in relation to the longitudinal axle of the tube (12).

4. Handle (14) according to claims 1-3, **characterized in that** said elastic elements (30) are also shaped to fit in the recesses on the outside surface of the tube (12), and that said elastic elements (30) have a length exceeding the distance between a first end surface in the recess (26) of the handle section (20, 21) and a second end surface in the recess on the outside surface of the tube (12) in order to separate the handle section (20, 21) and the tube (12) from each other.

5. Handle (14) according to claim 4, **characterized in that** the number of recesses in the handle sections (20, 21) as well as on the tube (12) is two, said two recesses being placed separated from each other, preferably substantially opposite to each other.

6. Handle (14) according to claim 5, **characterized in that** the recesses (26) have a circular, triangular or rectangular cross section and that the elastic elements (30) have the same cross sectional shape as the shape of the recesses (26).

7. Handle (14) according to claim 1, wherein the rear end of the handle (14) has a band (22) securable around the tube (12) by a screw (23) and a nut (24).

8. Handle (14) according to any of the previous claims, **characterized in that** the tube (12) and the handle (14) provided with means (28, 31) for limiting the maximum movement of the handle sections (20, 21) around the tube (12).

9. Handle (14) according to claim 8, **characterized in that** the limitation for the maximum movement of the handle (14) in relation to the tube (12) is achieved by a protruding part (28) on the tube (12) that is pressed against a first stopping surface (31) on the handle sections (21) when the handle (14) is rotated in one direction and a second stopping surface (31) when the handle (14) is rotated in the other direction.

10. A portable tool (10) comprising an engine (11) for powering said tool (10) placed in one end of a tube (12) and a working tool (13) in the opposite end of said tube (12) and a handle (14) to be secured around the tube (12) somewhere between the engine (11) and the working tool (13), the longitudinal direction of said handle (14) being substantially parallel to the longitudinal direction of the tube (12), **characterized in that** the handle (14) is according to claims 1-9.

11. The portable tool (10) according to claim 10, wherein the tool is a portable clearing saw (10).

## Patentansprüche

1. Griff (14) für ein tragbares Werkzeug (10), wobei das Werkzeug (10) umfasst: einen Motor (11) zum Antreiben des Werkzeugs (10), das in einem Ende eines Rohrs (12) angeordnet ist, und eines Arbeitswerkzeugs (13) im gegenüberliegenden Ende des Rohrs (12); wobei der Griff (14) umfasst: mindestens zwei Griffabschnitte (20, 21), die um das Rohr (12) irgendwo zwischen dem Motor (11) und dem Arbeitswerkzeug (13) gesichert werden können, wobei die Längsrichtung des Griffs (14) im Wesentlichen parallel zur Längsrichtung des Rohrs (12) verläuft, **dadurch gekennzeichnet, dass** das vordere Ende des Griffs (14) um das Rohr (12) über einen elastischen Ring (18, 19) gesichert werden kann und das hintere Ende des Griffs (14) durch mindestens zwei elastische Elemente (30) gesichert werden kann, um die Übertragung der Schwingungen von dem Rohr (12) auf den Griff (14) zu reduzieren, und dadurch, dass die innere Oberfläche jedes Griffabschnitts (20, 21) mit mindestens zwei Aussparungen (26) bereitgestellt ist, und dadurch, dass jedes der elastischen Elemente (30) derart geformt ist, um in eine Aussparung (26) zu passen und zwischen dem Abschnitt (20, 21) des Griffs (14) und dem Rohr (12) angeordnet ist.

2. Griff (14) nach Anspruch 1, **dadurch gekennzeichnet, dass** sich eine Längsachse des elastischen Elements (30) im Wesentlichen in Querrichtung von der Längsrichtung des Rohrs (12) erstreckt.

3. Griff (14) nach Anspruch 1, **dadurch gekennzeichnet, dass** die äußere Oberfläche
des Rohrs (12) mit der gleichen Anzahl von Aussparungen bereitgestellt ist, wie die gesamte innere Oberfläche der Griffabschnitte (20, 21) und dadurch, dass jede Aussparung in dem Rohr (12) in der gleichen Radialrichtung wie die zugehörige Aussparung (26) auf der Innenseite der Griffabschnitte (20, 21) in Bezug auf die Längsachse des Rohrs (12) angeordnet ist.

4. Griff (14) nach einem der Ansprüche 1 bis 3, **dadurch gekennzeichnet, dass** die elastischen Elemente (30) auch geformt sind, um in die Aussparungen der äußeren Oberfläche des Rohrs (12) zu passen, und dadurch, dass die elastischen Elemente (30) eine Länge aufweisen, die den Abstand zwischen einer ersten Endoberfläche in der Aussparung (26) des Griffabschnitts (20, 21) und einer zweiten Endoberfläche in der Aussparung an der äußeren Oberfläche des Rohrs (12) überschreitet, um den Griffabschnitt (20, 21) und das Rohr (12) voneinander zu trennen.

5. Griff (14) nach Anspruch 4, **dadurch gekennzeichnet, dass** die Anzahl von Aussparungen in den Griffabschnitten (20, 21) sowie am Rohr (12) zwei ist, wobei die zwei Aussparungen getrennt voneinander angeordnet sind, vorzugsweise im Wesentlichen einander gegenüber.

6. Griff (14) nach Anspruch 5, **dadurch gekennzeichnet, dass** die Aussparungen (26) einen runden, dreieckigen oder rechteckigen Querschnitt aufweisen und dadurch, dass die elastischen Elemente (30) den gleichen Querschnitt wie die Form der Vertiefungen (26) aufweisen.

7. Griff (14) nach Anspruch 1, wobei das hintere Ende des Griffs (14) ein Band (22) aufweist, das durch eine Schraube (23) und eine Mutter (24) um das Rohr (12) gesichert werden kann.

8. Griff (14) nach einem der vorhergehenden Ansprüche, **dadurch gekennzeichnet, dass** das Rohr (12) und der Griff (14) mit Mitteln (28, 31) zum Begrenzen der maximalen Bewegung der Griffabschnitte (20, 21) um das Rohr (12) bereitgestellt ist.

9. Griff (14) nach Anspruch 8, **dadurch gekennzeichnet, dass** die Begrenzung für die maximale Bewegung des Griffs (14) in Bezug auf das Rohr (12) durch ein vorstehendes Teil (28) am Rohr (12) erreicht wird, das gegen eine erste Anschlagsoberfläche (31) an den Griffabschnitten (21) gepresst wird, wenn der Griff (14) in eine Richtung gedreht wird, und gegen eine zweite Anschlagoberfläche (31), wenn der Griff (14) in die andere Richtung gedreht wird.

10. Tragbares Werkzeug (10), umfassend einen Motor (11) zum Antreiben des Werkzeugs (10), das in einem Ende eines Rohrs (12) angeordnet ist, und ein Arbeitswerkzeug (13) in dem gegenüberliegenden Ende des Rohrs (12), und einen Griff (14), der um das Rohr (12) irgendwo zwischen dem Motor (11) und dem Arbeitswerkzeug (13) gesichert werden soll, wobei die Längsrichtung des Griffs (14) im Wesentlichen parallel zur Längsrichtung des Rohrs (12) verläuft, **dadurch gekennzeichnet, dass** der Griff (14) einer nach einem der Ansprüche 1 bis 9 ist.

11. Tragbares Werkzeug (10) nach Anspruch 10, wobei das Werkzeug eine tragbare Spaltsäge (10) ist.

## Revendications

1. Poignée (14) pour un outil portatif (10), l'outil (10) comprenant un moteur (11) pour alimenter ledit outil (10), placé à une extrémité d'un tube (12), et un outil de travail (13) dans l'extrémité opposée dudit tube (12) ; la poignée (14) comprenant au moins deux sections de poignée (20, 21) qui peuvent être fixées autour du tube (12) à un emplacement entre le moteur (11) et l'outil de travail (13), la direction longitudinale de ladite poignée (14) étant substantiellement parallèle à la direction longitudinale du tube (12), **caractérisée en ce que** l'extrémité avant de ladite poignée (14) peut être fixée autour du tube (12) par le biais d'une bague élastique (18, 19) et l'extrémité arrière de la poignée (14) peut être fixée par au moins deux éléments élastiques (30) afin de réduire le transfert des vibrations du tube (12) à la poignée (14), et **en ce que** la surface intérieure de chaque section de poignée (20, 21) est pourvue d'au moins deux renfoncements (26), et **en ce que** chacun desdits éléments élastiques (30) est formé de manière à s'ajuster dans un renfoncement (26) et est placé entre la section (20, 21) de la poignée (14) et le tube (12).

2. Poignée (14) selon la revendication 1, **caractérisée en ce qu'**un axe longitudinal de l'élément élastique (30) s'étend substantiellement dans la direction transversale depuis la direction longitudinale du tube (12).

3. Poignée (14) selon la revendication 1, **caractérisée en ce que** la surface extérieure du tube (12) est pourvue du même nombre de renfoncements que la surface intérieure totale des sections de poignée (20, 21) et **en ce que** chaque renfoncement sur le tube (12) est placé dans la même direction radiale qu'un renfoncement correspondant (26) sur l'intérieur desdites sections de poignée (20, 21) par rapport à l'axe longitudinal du tube (12).

4. Poignée (14) selon les revendications 1 à 3, **caractérisée en ce que** lesdits éléments élastiques (30) sont également formés de manière à s'ajuster dans les renfoncements sur la surface extérieure du tube (12), et **en ce que** lesdits éléments élastiques (30) ont une longueur dépassant la distance entre une première surface d'extrémité dans le renfoncement (26) de la section de poignée (20, 21) et une deuxième surface d'extrémité dans le renfoncement sur la surface extérieure du tube (12) afin de séparer la section de poignée (20, 21) et le tube (12) l'un de l'autre.

5. Poignée (14) selon la revendication 4, **caractérisée en ce que** le nombre de renfoncements dans les sections de poignée (20, 21) ainsi que sur le tube (12) est de deux, lesdits deux renfoncements étant placés de manière séparée l'un de l'autre, de préférence de manière substantiellement opposée l'un à l'autre.

6. Poignée (14) selon la revendication 5, **caractérisée en ce que** les renfoncements (26) présentent une section transversale circulaire, triangulaire ou rectangulaire et **en ce que** les éléments élastiques (30) présentent la même forme en section transversale que la forme des renfoncements (26).

7. Poignée (14) selon la revendication 1, dans laquelle l'extrémité arrière de la poignée (14) présente une bande (22) pouvant être fixée autour du tube (12) par une vis (23) et un écrou (24).

8. Poignée (14) selon l'une quelconque des revendications précédentes, **caractérisée en ce que** le tube (12) et la poignée (14) sont pourvus de moyens (28, 31) pour limiter le mouvement maximal des sections de poignée (20, 21) autour du tube (12).

9. Poignée (14) selon la revendication 8, **caractérisée en ce que** la limitation pour le mouvement maximal de la poignée (14) par rapport au tube (12) est réalisée par une partie saillante (28) sur le tube (12) qui est pressée contre une première surface de butée (31) sur les sections de poignée (21) lorsque la poignée (14) est tournée dans une direction et contre une deuxième surface de butée (31) lorsque la poignée (14) est tournée dans l'autre direction.

10. Outil portatif (10) comprenant un moteur (11) pour alimenter ledit outil (10), placé dans une extrémité d'un tube (12), et un outil de travail (13) dans l'extrémité opposée dudit tube (12) et une poignée (14) destinée à être fixée autour du tube (12) à un emplacement entre le moteur (11) et l'outil de travail (13), la direction longitudinale de ladite poignée (14) étant substantiellement parallèle à la direction longitudinale du tube (12), **caractérisé en ce que** la poignée (14) est réalisée selon les revendications 1 à 9.

11. Outil portatif (10) selon la revendication 10, dans lequel l'outil est une scie de débroussaillage portative (10).
